Europäisches Patentamt

European Patent Office

Office européen des brevets

(11) Publication number: **0 388 069**
**A2**

## (12) EUROPEAN PATENT APPLICATION

(21) Application number: **90302419.8**

(51) Int. Cl.⁵: **H02M 3/158**

(22) Date of filing: **07.03.90**

(30) Priority: **16.03.89 FI 891254**

(43) Date of publication of application:
**19.09.90 Bulletin 90/38**

(84) Designated Contracting States:
**AT BE CH DE DK ES FR GB GR IT LI LU NL SE**

(71) Applicant: **NOKIA MOBILE PHONES LTD.**
**P.O. Box 86**
**SF-24101 Salo(FI)**

(72) Inventor: **Ylönen, Tapio**
**Koulukatu 10**
**SF-24130 Salo(FI)**

(74) Representative: **Gordon, Martin et al**
**G.F. Redfern & Company Marlborough Lodge**
**14 Farncombe Road**
**Worthing West Sussex, BN11 2BT(GB)**

(54) DC-DC converter circuit.

(57) The present invention concerns a DC-DC converter for use in the power unit of a chopping power source. The converter consists of a ladder network wherein the longitudinal components are an inductive member (L1), a capacitative member (C1) and a diode (D1), and the transversal components are a capacitative member (61), a transistor switch (S1), an inductive member (L3) and a capacitative member (C3). The last component of the network is a capacitative member (C3). The circuit is simple, requiring only one control signal, which may be directly related to the ground level of the circuit.

FIG. 4

## DC-DC converter circuit

The present invention concerns a DC-DC converter which used particularly in the power unit of a chopper power source.

In a chopper power source a DC-DC converter is required by which the input voltage can be steplessly converted to be either higher or lower. The converter circuit should be as simple as possible, it should have good efficiency, and it should be easy to control with control electronics producing a pulse width modulated signal.

A DC-DC converter usually comprises energy storing components, such as inductances and capacitances, and one or several switches. With one switch the input voltage is chopped, whereby in different positions of the switch energy is stored and transferred from one component to another in a manner determined by the particular circuit. As end result is achieved the desired DC level conversion between input and output. The output current may be pulsed or it may be made triangular by appropriate circuit design. The ripple current of input and output may also be influenced with the circuit design. In the conversion the DC level is changed by controlling the on/off pulse ratio of the switch. When speaking of the pulse ratios, the symbol $D$ is used to refer to the time when the switch is closed and the symbol $D'$ for the period when the switch is open. Hereby, $D' = 1-D$.

A variety of designs for implementing DC-DC converters are known in the art. A kind of fundamental circuit is the Boost-Buck converter. It comprises a cascade-connected Boost converter which has only the chance to increase the voltage, a Buck converter by which the voltage can only lowered. With the Boost converter, $V_{out}/V_{in} = 1/D'$ and with the Buck converter, $V_{out}/V_{in} = D$. The DC gain of the cascade circuit of these converters cascade circuit is therefore $D/D'$.

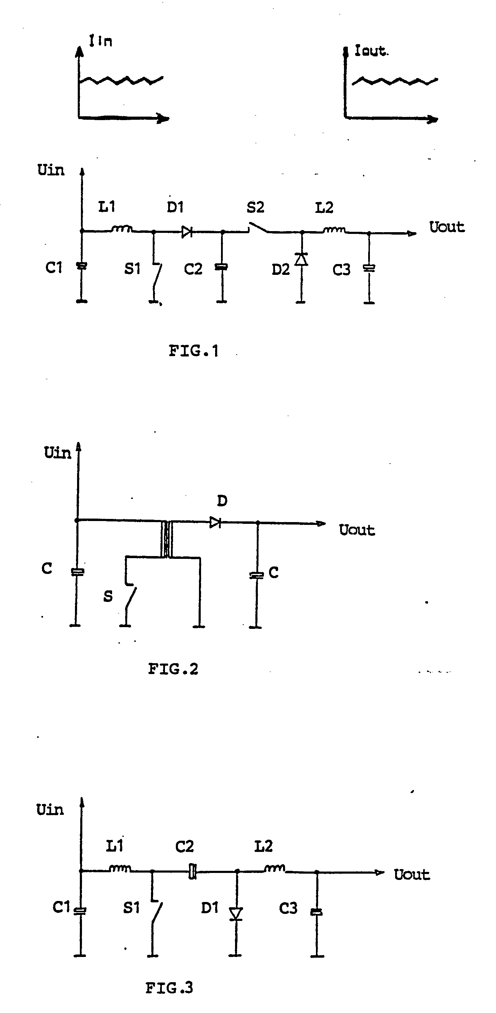

The principle of said circuit is presented in Fig. 1. The forward part of the cascade is Boost converter and the rear part, a Buck converter. When the switch S1 is closed, energy is stored in the coil L1, and this energy is discharged to the capacitor C2 when the switch is open, summed with the input voltage Uin. When the switch S2 is closed, the capacitor C2 supplies current through the coil L2 to the output and, simultaneously, energy is stored in the coil L2. When the switch S2 is opened, the polarity of the voltage of the coil L2 is reversed and its energy discharged to the capacitor C3. The output voltage $U_{out}$ is obtained. The shape of both the input current and the output current is also shown in Fig. 1.

This circuit has a number of advantages: both the input and output current is continuous (not pulse-shaped) with triangular wave form and the efficiency is comparatively good; no large filters are needed, either. As drawbacks may be mentioned that an extra coupling transistor and a diode are needed. This increases the coupling losses, which reduces the efficiency. At least one of the two coupling transistors requires a control isolated from the circuit, for instance, use of an isolating transformer or of a complex circuit, because the emitter of the transistor used as a switch is not connected to ground. Two switch control circuits mutually isolated add to the complexity of the circuit design.

Another Dc-DC converter design of prior art is the Flyback converter, presented in Fig. 2. In this converter, a transformer is used for storing energy, instead of separate coils. Said fundamentally simple design comprises one single switch S; when said switch is closed, energy is stored in the transformer L through the primary winding, and when said switch is opened, the energy discharges from the secondary winding through a diode D to a capacitor C. Good points of this converter are its simple design and the need of only one switch control signal, which signal may be directly related to the ground level of the circuit. The drawback are high ripple currents, due to the pulsed currents, because of which LC filtering is required for both the input and output currents. At higher power ratings, the efficiency is not particularly good because the pulsed currents cause internal losses in the components.

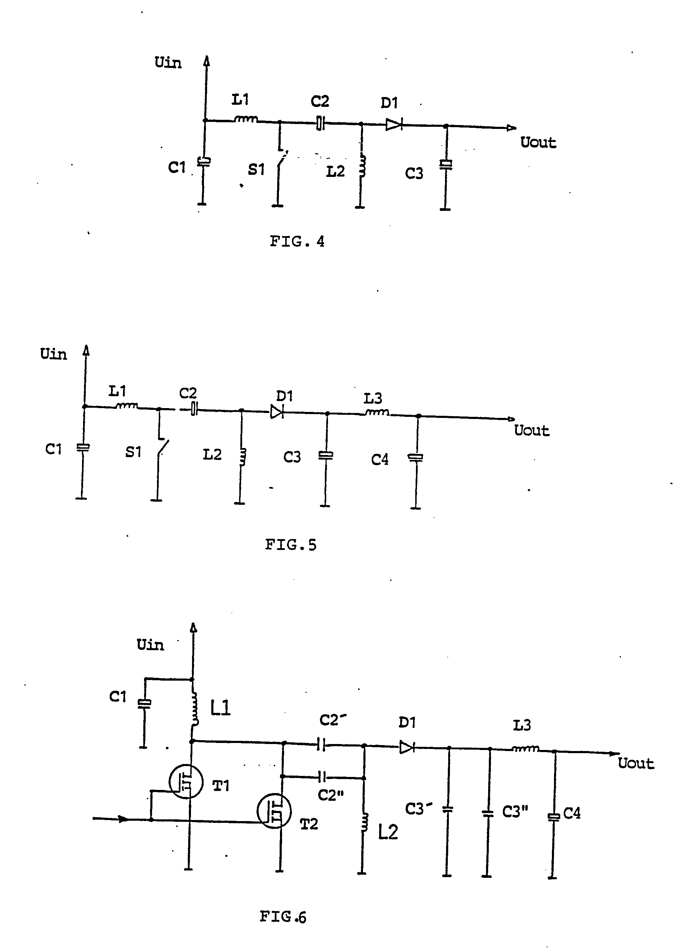

As a third DC-DC converter known in the art is introduced the Cuk converter, its circuit being presented in Fig. 3. In this converter of simple design, when the input voltage Uin is connected to the input, the capacitor C2 is charged to the voltage Uin - 0.7V. When the switch S1 is closed, the coil L1 is charged and, at the same time, the charge of the capacitor C2 is discharged into the output, thus charging the capacitor C3. When the switch opens, the energy stored in the coil L1 recharges the capacitor C2. The Cuk converter has good efficiency and only one control signal is needed, which may be directly related to the ground level of the circuit. The converter generates minimal ripple currents, while on the other hand it reverses the polarity of the voltage.

The above-presented converter circuits of prior art are embarrassed by certain drawbacks. The use of two controlled switches is difficult because the control of at least one of the switches must be isolated with an isolating transformer or with a complex control circuit from the converter circuit proper and from the other switch. The switches require separate control signals. The efficiency is not always good at high power rating owing to the pulsed currents. rne design which is simple in principle may be less simple in practical implementation. For instance, in a practical implementation of the simple Cuk converter a transformer is used with which the DC differential between the input and output is produced. Hereby, the design is no longer very simple.

An object of the present invention is to produce a DC-DC converter which presents the minimum of drawbacks of the converters known in the art, and which is simple in design.

According to this invention there is provided a DC-DC converter for use in the power unit of a chopper power source, characterised in that it comprises a ladder network including, as viewed from the direction of the input voltage, an inductive member, a capacitative member and a diode as longitudinal members, and as transversal members, a capacitative member, a switch, an inductive member and a capacitative member at the output side of the network.

A converter embodying the invention is unsophisticated. It comprises only one coupling transistor which may be directly related to the ground level of the circuit. Only one control signal is needed. The circuit requires no isolating transformer.

Embodiments of the invention will now be described, referring to the appended figures, in which:-

Fig. 1 presents a cascade-connected Boost-Buck converter;

Fig. 2 presents a Flyback converter;

Fig. 3 presents a Cuk converter;

Fig. 4 presents a basic circuit for a DC-DC converter embodying the invention;

Fig. 5 presents a more practical modified form of the circuit shown in Fig. 4; and

Fig. 6 presents a more detailed embodiment of the invention.

The converter circuits shown in Figs. 1 to 3 represent designs of prior art and their modes of operation have already been described in the foregoing.

The converter circuit of the invention, shown in Fig. 4, comprises a ladder network comprising as viewed from the direction of the supply voltage Uin, an inductance of the longitudinal path L1, a switch S1 being inserted in the subsequent transversal path; furthermore, there is in the longitudinal branch a capacitance C2, a diode D1 in the longitudinal path following thereafter, and an inductance L2 in the transversal path between said paths. In the transversal path after the diode D1 is disposed a capacitance C3. The network may begin with a transversal capacitance C1. This capacitance will filter out the ripple current produced by the converter.

The converter operates as follows: when the voltage Uin is connected to the input, the capacitor C2 also becomes charged to said voltage. When the switch S1 is closed, current will start to flow through coil L1 and switch S1 towards the common ground level of the circuit, and energy is stored in the coil L1. Another current passes through the components L2,C2 and likewise, through the switch S1, whereby energy from the capacitor C2 is transferred to the coil L2. In the present instance, the diode D1 is in the blocking direction, and no current passes. When the switch S1 is opened, the energy stored in the coil L1 is discharged and the current starts to flow through the components L1,C2 and D1 towards the output Uout. Said current charges the capacitor C2 and the output filtering capacitor C3. When the switch S1 is opened, the energy stored in the coil L2 also discharges through the diode D1 to the output, simultaneously charging the capacitor C3. The circuit produces a pulsed output current and takes up a continuous triangular current. Continuous triangular current is favourable with a view to interference suppression towards the mains. It is advantageous to filter the pulsed output current by means of an LC filter as shown in Fig. 5. The filter consists of an inductance L3 and a capacitance C4. Such filter may be replaced by or combined with a similar filter at the input end of the network.

In the circuit here presented, the momentary current passing through the switch S1 is rather high, as is also the current passing through the energy-storing members C2 and C3. It is therefore advantageous to use parallel-connected coupling transistors and capacitors. Such a design is presented in Fig. 6, in which the transistors T1 and T2 connected in parallel are FET transistors. The transistors may instead be of another type, e.g. bipolar ones. The capacitances C2,C3 in Figs. 4 and 5 are now provided by capacitors $C2'$,$C2''$ and $C3'$,$C3''$.

The circuit of the invention is simple. No isolating transformer is needed and the inductances may be separate components, e.g. inexpensive rod coils. Since there is only one switch, only one control signal is needed which may be directly related to the ground level of the circuit. When two parallel transistor switches, as in Fig. 6 are used, they have, of course, a common control signal. Because of the high momentary current passing through the switch, a coupling transistor with low resistance in the ON state has to be used.

## Claims

1. A DC-DC converter for use in the power unit of a chopper power source, characterised in that it comprises a ladder network including, as viewed from the direction of the input voltage (Uin), an inductive member (L1), a capacitative member (C2) and a diode (D1) as longitudinal members, and as transversal members, a capacitative member (C1), a switch (S1), an inductive member (L2) and a capacitative member (C3) at the output side of the network.

2. A DC-DC converter according to claim 1, characterised in that the switch (S1) is a transistor.

3. A DC-DC converter according to claim 2, characterised in that the transistor is a FET transistor or a bipolar transistor.

4. A DC-DC converter according to claim 1, characterised in that the switch (S1) comprises transistors (T1,T2) connected in parallel, and the capacitative members (C2,C3) comprise capacitors (C3$'$,C3$''$;C2$'$,C2$''$) connected in parallel.

5. A DC-DC converter according to claim 1, characterised in that to the input and/or output of the network is connected a filter (L3,C4).

EP 0 388 069 A2

FIG.1

FIG.2

FIG.3

Uin

L1   C2   D1

C1   S1   L2   C3   Uout

FIG. 4

Uin

L1   C2   D1   L3

C1   S1   L2   C3   C4   Uout

FIG.5

Uin

C1   L1

C2´   D1   L3

T1   C2"

T2   L2   C3´   C3"   C4   Uout

FIG.6